Europäisches Patentamt

European Patent Office

Office européen des brevets

(11) Veröffentlichungsnummer: **0 014 331**
A1

(12) # EUROPÄISCHE PATENTANMELDUNG

(21) Anmeldenummer: 80100144.7

(22) Anmeldetag: 12.01.80

(51) Int. Cl.³: **A 01 G 27/00**

(30) Priorität: 05.02.79 DE 2904187

(43) Veröffentlichungstag der Anmeldung:
20.08.80 Patentblatt 80/17

(84) Benannte Vertragsstaaten:
AT BE CH DE FR GB IT LU NL SE

(71) Anmelder: Peeters, Rudolf
Heideckstrasse 29
D-4150 Krefeld(DE)

(72) Erfinder: Peeters, Rudolf
Heideckstrasse 29
D-4150 Krefeld(DE)

(74) Vertreter: Stark, Walter, Dr.-Ing.
Moerser Strasse 140
D-4150 Krefeld(DE)

(54) Topfeinheit für die Dauerbewässerung von Pflanzen.

(57) Diese Topfeinheit (1) besteht aus einem Übertopf (3) mit einem Wasserreservoir (10) zumindest in dessen unterem Teil, erforderlichenfalls auch oberhalb des Wasserreservoirs angebrachten Pflanzentopf (2) und einem in das Wasserreservoir eintauchenden Saugdocht zur Befeuchtung der Erde (4).

Um eine gleichmäßige Wasserverteilung in der Erde (4) zu erreichen, ist der Saugdocht aus einer die Erde (4) zumindest teilweise umgebenden Manschette (18) ausgebildet.

EP 0 014 331 A1

Dr.-Ing. WALTER STARK 78 0014331

PATENTANWALT

Moerser Straße 140    D-4150 Krefeld 1    ☎ (02151) 28222 u. 20469    ⑆ 8 53 578

Rudolf Peeters, Heideckstraße 29, 4150 Krefeld

Topfeinheit für die Dauerbewässerung von Pflanzen

Die Erfindung betrifft eine Topfeinheit für die Dauerbewässerung von Pflanzen, bestehend aus einem Übertopf mit einem Wasserreservoir zumindest in dessen unterem Teil, erforderlichenfalls einem oberhalb des Wasserreservoirs angeordneten Pflanzentopf und einem in das Wasserreservoir eintauchenden Saugdocht zur Befeuchtung der Erde. Derartige Topfeinheiten machen ein tägliches Gießen der Pflanzen überflüssig, da der Saugdocht der Erde kontinuierlich Wasser zuführt.

Die bekannten Topfeinheiten dieser Art weisen einen Pflanzentopf aus Ton oder Kunststoff auf, in dem sich die Erde und die Pflanze befindet und der in einem passenden Übertopf eingesetzt ist. Zumindest im unteren Teil dieses Übertopfes ist ein Wasserreservoir angeordnet, das nach oben hin offen ist und in dem sich ein Podest aus meist einer Reihe von Stegen für den Pflanzentopf befindet, damit dieser nicht in das im Wasserreservoir befindliche Wasser eintaucht.

Pflanzentopf und Übertopf können verschieden gestaltet sein. Sie können eine Einheit bilden, sind jedoch meistens zweiteilig, so daß der Pflanzentopf herausnehmbar ist. Der Übertopf ist manchmal auch bis auf einen Untersetzer, der dann allein das Wasserreservoir bildet, reduziert.

Deutsche Bank AG Krefeld 103/1525 BLZ 32070080 · Sparkasse Krefeld 305722 BLZ 32050000 · Postscheck Essen 4055-431 BLZ 36010043

0014331

- 2 -

In manchen Fällen ist er auch doppelwandig mit einer seitlichen Einfüllöffnung ausgebildet, wobei der zwischen den beiden Wänden eingeschlossene Ringraum der Aufnahme von Wasser dient (vgl. DE-PS 713 430).

Damit der Erde im Pflanzentopf dauernd Wasser zugeführt wird, ist ein Saugdocht vorgesehen, der mit seinem unteren Ende in das Wasser im Wasserreservoir eintaucht und der durch ein Loch in der Bodenmitte des Pflanzentopfes in die Erde eingeführt ist. Der Saugdocht besteht dabei aus einem wasseransaugenden Material, das wie eine kleine Pumpe wirkt.

Der Nachteil dieser Art von Dauerbewässerung besteht darin, daß der Saugdocht das Wasser sehr ungleichmäßig in der Erde verteilt. Da der Docht sich in der Mitte der Erde befindet, steht insbesondere im äußeren und oberen Bereich häufig zu wenig Wasser zur Verfügung. Eine vermehrte Zuführung mit dem Zweck, auch diese Bereiche mit einer ausreichenden Menge Wasser zu versorgen, führt andererseits zu einer Überwässerung des Mittenbereichs, was ebenfalls für die Pflanzen schädlich ist.

Der Erfindung liegt die Aufgabe zugrunde, die Topfeinheit der eingangs genannten Art so zu gestalten, daß eine wesentlich gleichmäßigere Wasserverteilung in der Erde erzielt wird.

Diese Aufgabe wird erfindungsgemäß dadurch gelöst, daß der Saugdocht als eine die Erde zumindest teilweise umgebende Manschette ausgebildet ist. Die Manschette führt somit das Wasser von außen an die Erde heran, so daß die Randbereiche ausreichend mit Wasser versorgt werden. Aber auch der Mittenbereich erhält genügend Wasser, da mit der Abnahme des dorthin vordringenden Wassers gleichzeitig auch das zu befeuchtende Erdvolumen abnimmt. Insgesamt wird somit eine gleichmäßige Wasserverteilung über das gesamte Erdvolumen erzielt, so daß sich eine optimale Wasserversorgung für die Pflanzen ergibt. Dabei sollte zweckmäßigerweise die Manschette bis zum oberen Rand der Erde hochgezogen sein.

Bei guter Durchwurzelung des Pflanzenballens, also der Erde, kann dabei auf einen Pflanzentopf verzichtet werden. Ist die Erde jedoch schlecht durchwurzelt, empfiehlt es sich, den Pflanzenballen in einen Pflanzentopf aus Ton zu setzen, an dessen Außenseite dann die Manschette anliegt. Durch die Kapillarwirkung des Tontopfes wird dann das von der Manschette aus dem Wasserreservoir angesaugte Wasser durch die Wandung des Pflanzentopfes und dann in die Erde hineintransportiert. Hierdurch ergibt sich eine ausgesprochen gleichmäßige Wasserverteilung in der Erde.

Die Wasserzuführung läßt sich dabei dadurch steuern, daß die Manschette an ihrem unteren Rand mit über dem Spiegel des Wassers im Wasserreservoir hochgezogenen Ausnehmungen versehen ist. Durch entsprechende Dimensionierung dieser Ausnehmung oder durch Hochklappen der Randteile zwischen den Ausnehmungen läßt sich der wasseransaugende Querschnitt entsprechend dem Wasserbedarf der jeweils eingetopften Pflanze anpassen, wodurch sich eine optimale Wasserversorgung ergibt.

Die Erfindung schlägt ferner vor, daß die Manschette aus einem nicht faulenden Kunststoff ilz besteht, wobei es zweckmäßig ist, deren Außenseite mit einer porösen Folie zu kaschieren, um an dieser Seite Verdunstungen einzuschränken.

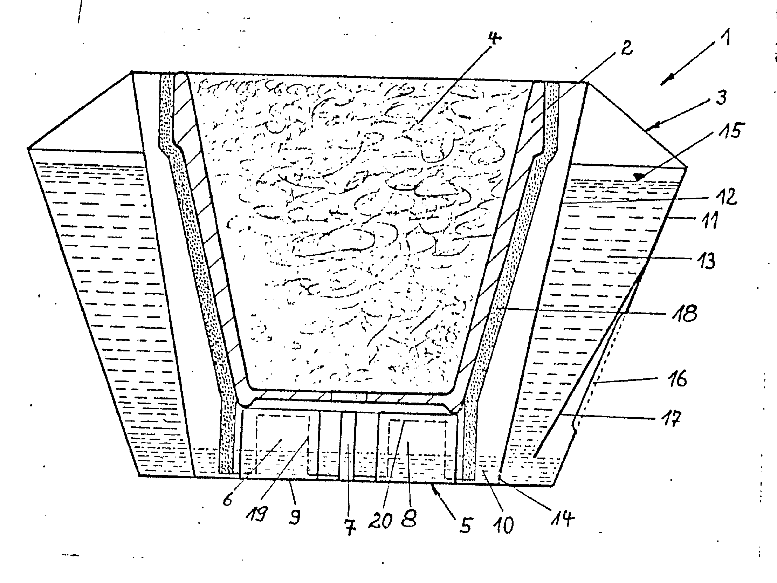

In der Zeichnung ist die Erfindung anhand eines Ausfüh rungsbeispiels näher veranschaulicht. Sie zeigt eine Topfeinheit 1 mit einem Pflanzentopf 2 aus Ton und einem Übertopf 3, die zusammen ein Dauerbewässerungssystem für

0014331

- 4 -

die in dem Pflanzentopf 2 befindliche Erde 4 bilden.

Der Pflanzentopf 2 steht auf einem Sockel 5, der aus vier sternförmig angeordneten, vertikalen Stegen 6, 7, 8 besteht. Diese Stege 6, 7, 8 sind am Boden 9 des Übertopfes 3 angeformt, der ein Wasserreservoir 10 bildet. Die Höhe des Wasserspiegels in diesem Wasserreservoir 10 wird dabei durch die besondere Ausgestaltung des Übertopfes 3 bestimmt.

Der Übertopf 3 ist doppelwandig mit einer Außenwandung 11 und einer Innenwandung 12 ausgebildet. Der sich hieraus ergebende Ringraum 13 ist oben geschlossen. An der Innenwandung 11 befinden sich untere Durchtrittsöffnungen 14, über die das in dem Ringraum 13 befindliche Wasser 15 in das Wasserreservoir 10 fließen kann.

In der Außenwandung ist eine Einfüllöffnung 16 vorgesehen, die gegenüber dem Ringraum 13 durch eine Abdeckwand 17 abgedeckt ist. Der untere Rand dieser Abdeckwand 17 ist tiefer als der Unterrand der Einfüllöffnung 16 und damit auch niedriger als die Stege 6, 7, 8. Er bestimmt normalerweise die Höhe des Wasserspiegels im Wasserreservoir 10. Das in dem Ringraum 13 befindliche Wasser 15 kann sich dabei nicht mit dem Wasserreservoir 10 ausgleichen, da durch die geschlossene Ausbildung des Ringraums 13 nach oben keine Luft nachrücken kann. Der Pflanzentopf 2 ist an seiner Außenseite von einer Manschette 18 aus wasseransaugendem Filz umgeben, die bis zum oberen Rand des Pflanzentopfes 2 reicht und mit dem unteren Rand in das Wasser im Wasserreservoir 10 eintaucht. Dieser untere Rand ist mir Ausnehmungen 19, 20 (gestrichelt dargestellt) versehen, die über den Wasserspiegel hochgezogen sind und den wasseransaugenden Querschnitt verkleinern. Auf diese Weise läßt sich

Ansprüche

1. Topfeinheit für die Dauerbewässerung von Pflanzen, bestehend aus einem Übertopf mit einem Wasserreservoir zumindest in dessen unterem Teil, erforderlichenfalls einem oberhalb des Wasserreservoirs angeordneten Pflanzentopf und einem in das Wasserreservoir eintauchenden Saugdocht zur Befeuchtung der Erde im Pflanzentof, dadurch gekennzeichnet, daß der Saugdocht als eine die Erde zumindest teilweise umgebende Manschette (18) ausgebildet ist.

2. Topfeinheit nach Anspruch 1, dadurch gekennzeichnet, daß die Manschette (18) bis zum oberen Rand der Erde (4) hochgezogen ist.

3. Topfeinheit nach Anspruch 1 oder 2, dadurch gekennzeichnet, daß der Pflanzentopf (2) aus Ton besteht und die Manschette (18) an dessen Außenseite anliegt.

4. Topfeinheit nach Anspruch 3, dadurch gekennzeichnet, daß die Manschette (18) an ihrem unteren Rand mit über dem Spiegel des Wassers im Wasserreservoir (10) hochgezogenen Ausnehmungen (19, 20) versehen ist.

5. Topfeinheit nach einem der Ansprüche 1 bis 4, dadurch gekennzeichnet, daß die Manschette (18) aus einem nichtfaulenden Kunststoffilz besteht.

6. Topfeinheit nach Anspruch 5, dadurch gekennzeichnet, daß die Außenseite der Manschette (18) mit einer porösen Folie kaschiert ist.

0014331

- 5 -

-die Menge des angesaugten Wassers entsprechend den Bedürfnissen der eingetopften Plfanze anpassen. Dies kann auch von Hand durch nachträgliches Einschneiden der Ausnehmungen 19, 20 geschehen, da sich der Filz leicht schneiden läßt, oder durch Hochklappen des verbleibenden Randes zwischen den Ausnehmungen.

Die Manschette 18 wirkt wie eine kleine Pumpe, die das Wasser an die Außenwand des aus Ton bestehenden Pflanzentopfes 2 heranführt. Dessen Kapillarität saugt das Wasser nach innen, so daß es - gleichmäßig über den Umfang verteilt - in die Erde 4 eindringt.

Besteht der Pflanzentopf aus wasserundurchlässigem Material, beispielsweise aus Kunststoff, so kommt eine äußere Ummantelung des Pflanzentopfes durch eine Manschette nicht infrage. In diesem Fall wird der Pflanzentopf von dem Pflanzenballen entfernt und dieser dann in die Manschette hineingesetzt.

**Europäisches Patentamt**

## EUROPÄISCHER RECHERCHENBERICHT

EP 80 10 0144

| Kategorie | Kennzeichnung des Dokuments mit Angabe, soweit erforderlich, der maßgeblichen Teile | betrifft Anspruch |
|---|---|---|
| | FR - A - 2 058 836 (GROSFILLEX S.A.R.L.)<br>* Seite 2, Zeile 10 bis Seite 3, Zeile 30, Fig. 1 *<br>—— | 1-3 |
| | DE- A1 - 2 437 141 (H.E. LOMMERZHEIM)<br>* Anspruch 1 *<br>—— | 5 |
| P | DE- U - 7 923 292 (H.P. SCHUMACHER et al.)<br>* Seite 6, Zeilen 1 bis 17; Fig. 1 *<br>———— | 1,2 |

### EINSCHLÄGIGE DOKUMENTE

**KLASSIFIKATION DER ANMELDUNG (Int.Cl.)**

A 01 G 27/00

**RECHERCHIERTE SACHGEBIETE (Int. Cl.)**

A 01 G 27/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-05-1980 | SCHOFER |

EPA form 1503.1 06.78